Europäisches Patentamt

(19) European Patent Office

Office européen des brevets

(11) Publication number: **0 026 536**
**B1**

(12) **EUROPEAN PATENT SPECIFICATION**

(45) Date of publication of patent specification: **20.03.85**

(21) Application number: **80200894.6**

(22) Date of filing: **24.09.80**

(51) Int. Cl.⁴: **F 16 L 47/06, B 29 C 57/00**

(54) **Plastics pipe part comprising a self-centering retaining member.**

(30) Priority: **25.09.79 NL 7907127**

(43) Date of publication of application:
**08.04.81 Bulletin 81/14**

(45) Publication of the grant of the patent:
**20.03.85 Bulletin 85/12**

(84) Designated Contracting States:
**AT BE CH DE FR GB IT LI LU NL SE**

(56) References cited:
**CH-A- 469 219**
**GB-A-1 578 743**
**NL-A-7 206 614**
**US-A-3 796 447**

(73) Proprietor: **WAVIN B.V.**
**Händellaan 251**
**NL-8031 EM Zwolle (NL)**

(72) Inventor: **Oostenbrink, Albertus Anthony**
**15 Irenestraat**
**NL-7772 CS Hardenberg (NL)**

(74) Representative: **van der Veken, Johannes**
**Adriaan et al**
**EXTERPATENT Willem Witsenplein 4**
**NL-2596 BK 's-Gravenhage (NL)**

Courier Press, Leamington Spa, England.

## Description

The invention relates to a plastics pipe part of the kind indicated in the preamble of claim 1 below.

A plastics pipe part of this type comprising a socket end being provided with a groove for receiving part of a sealing member and an annular retaining member, is known. The annular retaining member in this known plastics pipe part comprises on the one hand a ring part extending over part of the length of the groove, which part retains a head of a sealing member within the groove, whilst on the other hand the annular retaining member comprises a shoulder, situated within said groove, which shoulder may cooperate with the most outwardly situated wall of the groove. Said shoulder then functions as a centering part. In addition thereto the retaining member also comprises an annular part which cooperates with the inner edge of the socket end part (NL—A—7.206.614).

Said known plastics pipe part with socket end presents the disadvantages that a retaining member of that type requires the use of internal diameters of the socket end part, which have to meet narrow tolerances. In order to meet said requirements, plastics pipe parts with socket ends have to be used which either have to be made at a high cost price or in which the respective groove chambers have to be worked subsequently.

The present invention aims to provide a plastics pipe part of the aforementioned type, the internal diameter of such a plastics pipe part with socket end not having to meet narrow tolerances, whilst the centering part of the retaining member will always co-operate with the most outwardly situated wall of the groove, which retaining member may moreover be applied mechanically.

This object is attained in accordance with the invention by means of a plastics pipe part having the features stated in the characterising part of claim 1 below.

Due to the latter the retaining member cannot possibly be applied eccentrically. The retaining member may particularly be mechanically mounted, which offers an economy on labour expenditures. Furthermore, a subsequent working of the groove chambers is not necessary.

Preferred embodiments of the invention are disclosed in the subclaims.

With the invention an optimum centering of the retaining member is obtained and an appropriate retaining of a head part of the sealing member. The present invention is particularly suited for plastics pipe parts obtained by injection moulding.

The invention will now be illustrated with respect to an embodiment, by means of the accompanying drawings, wherein:

Fig. 1 is a plastics pipe part according to the invention;

Fig. 2 is a detail of an extremity of a plastics pipe part of this type, according to Fig. 1;

Fig. 3 is a mould, comprising an injection moulded pipe part according to the invention, and

Fig. 4 is a plastics pipe part during the mounting of the retaining member.

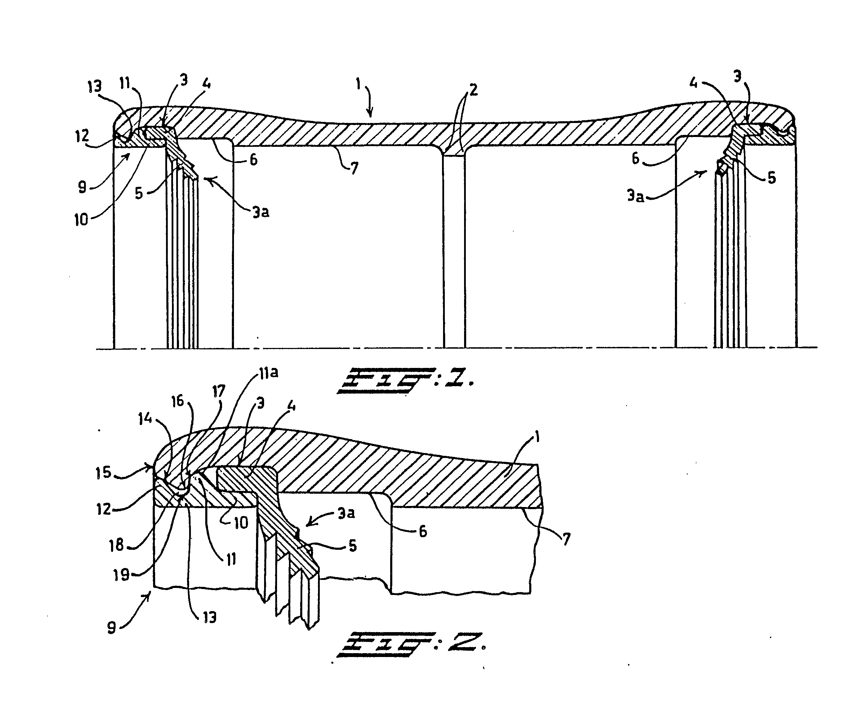

Fig. 1 shows a plastics pipe part 1 consisting e.g. of PVC, in the form of a double socket which comprises an abutment edge 2.

At the ends of the double socket 1 a groove 3 is formed for receiving a head part 4 of a sealing member 3a, said head part 4 being connected with a sealing sleeve 5, which can be received in a sealing sleeve receiving chamber 6. Said sealing sleeve 5 further comprises seal-improving rib-shaped projections.

Beyond receiving chamber 6, the socket part proper is situated which comprises an inner wall 7, the inner diameter of which is smaller than the inner diameter of the receiving chamber 6, but on the other hand, greater than the inner diameter of the abutment edge 2.

For retaining head part 4 of sealing member 5, a retaining member 9 consisting of a retaining member ring part 10, a first shoulder 11 and a second shoulder 12, is provided. The two shoulders 11 and 12 are interconnected through a flexible connecting part 13, which may have an inner diameter corresponding to the inner diameter of the ring part 10. The outer diameter of the flexible connecting part 13, is smaller than the outer diameter of ring part 10. The outer diameter of top 11a of shoulder 11 is appropriately smaller than the inner diameter of the groove 3. The diameter of the inner edge of the socket end part, which inner edge engages shoulder 12, increases towards the extremity 15 of the socket end.

Preferably inner edge 14 extends slopingly such, that the force during positioning retaining ring 9 is not too great and the forces occurring will realize the desired deformation and position of said retaining ring. On the other hand, said inner edge 14, merges into the slopingly extending most outwardly situated wall 17 of groove 3, through a rounding 16. As the inner diameter of said rounding 16, which forms the connection between the inner edge 14 and the slopingly extending groove wall part 17 of groove 3, is greater than the inner diameter of the receiving chamber 6, a free space 18 with a rounded bottom 19 will be provided between the aforementioned transition 16 and the outer side of connecting part 13. During the mounting of the retaining member, the shoulders 11 and 12 may occupy their correct position, due to the presence of the flexible connecting part 13, so that a self-centering action of the retaining member 9 will occur. In order to improve the fixation of head part 4, the undeformed retaining ring part 10 may advantageously have an outer diameter which is greater than the outer diameter during the fixation of head part 4. Thus, rubber head part 4 is pressed into groove chamber 3, so excluding a displacement of sealing member 3a.

After mounting, the retaining member has an inner diameter which only slightly exceeds the maximum outer diameter of a male pipe part to be inserted.

Due to the presence of free space 18 no narrow tolerance for the inner diameter of the inner edge of the socket end part is necessary.

This offers the possibility of injection moulding a double socket of the type as shown in Fig. 1 in a mould 30, which mould 30 comprises cooling channels 21 for passing a cooling fluid, which cooling channels are restricted to the area ending before the grooves to be formed at both ends of the double socket.

The inner side of the mould comprises a mandrel 22 and a groove forming ring 23. For moulding the double socket in accordance with the invention, an injection moulding channel 24 may be used, which debouches into space 25 for forming the abutment edge 2. Injection may also take place at the outer side of the socket.

After having filled the excavation 26 which will form the double socket 1, the left-hand mandrel part 27 will be removed from mould 30, after having intensively cooled the portion situated between the ends of the cooling channels 21.

As the end parts 28 are less cooled, said end parts will remain in an elastical plastic condition, so that the left-hand mandrel part 27 and the right-hand mandrel part 29 may be easily removed from the mould after having either opened outer mould 30 or having removed the mould parts 30a, which form the outer circumference of the socket ends.

Left-hand core part of mandrel part 27 having been removed, a metal ring 28 may easily loosen the injection moulded part at the location of abutment edge 2, so that said part may subsequently be removed from the inner side of the socket.

By cooling the end parts 28 of the double socket not too vigorous, great differences in size may occur between the inner diameters of the transitions 19 at the location of the end parts.

The retaining member preferably consists of polypropylene, but for smaller diameters polyethylene is also a very suitable material. Impact absorbing PVC may, however, also be very convenient.

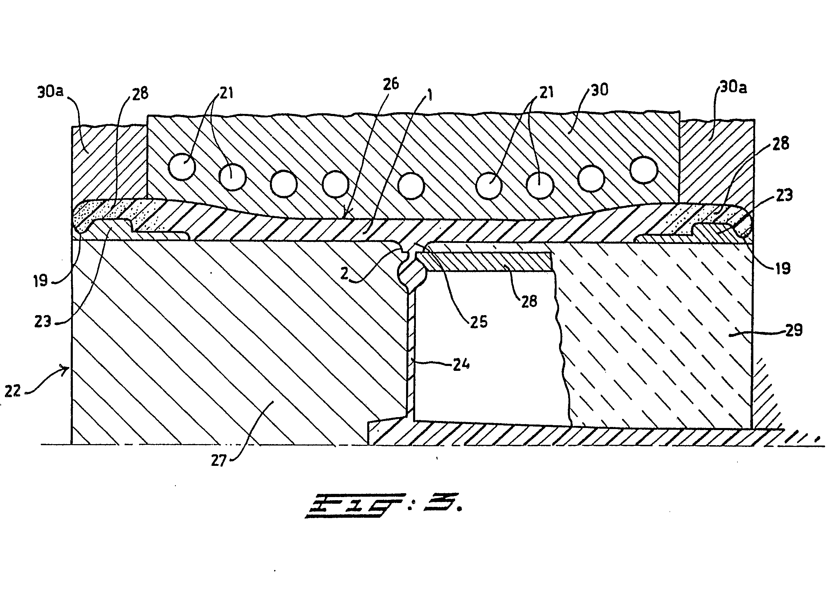

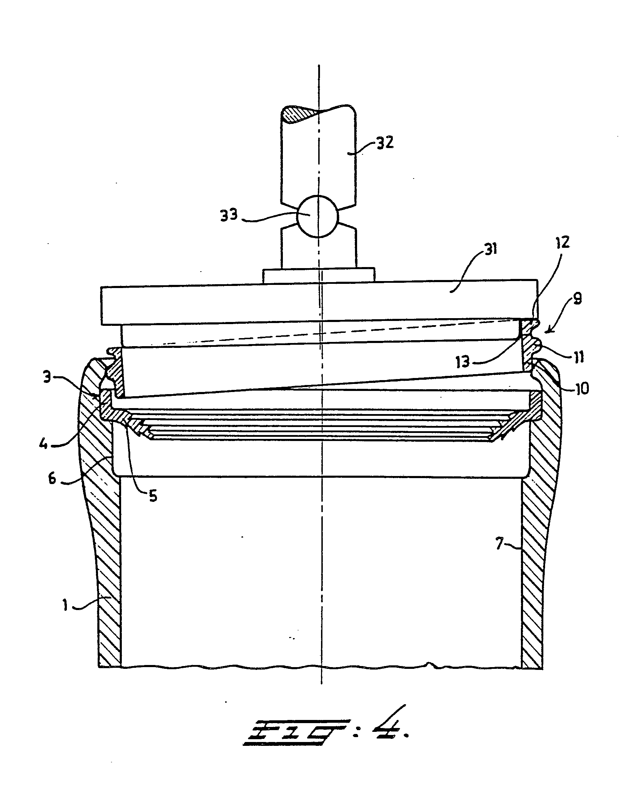

Fig. 4 shows the instalment of retaining ring 9 by means of a pressure plate 31. The plate is pressed downwards by means of a shaft 32, being operative upon plate 31 through a pivot 33.

In this way retaining ring 9 is pressed gradually and smoothly into the socket end.

## Claims

1. Plastics pipe part (1) comprising a socket end part and a self-centering retaining member (9), the socket end part comprising a groove (3) in its wall for receiving a head portion (4) of a sealing member (3a), said head portion (4) being retained in the groove by means of the retaining member (9), said retaining member comprising a ring part (10) extending at a distance from the inner wall of the socket radially inward of said head portion (4), and having an annular curved recess (19) engaging an annular curved projection (16) of the socket through two shoulders (11, 12) one at either side of the recess (19), said shoulders being connected by a deformable connecting part (13) and the outer diameter of the curved recess (19) being smaller than the smallest inner diameter of the curved projection (16) so that an annular free space (18) is formed therebetween, characterized in that the annular curved projection (16) located at the outer end of the socket bounds the groove (3) and in that one of the shoulders (12) engages the outer side (14) of the projection (16) of the socket end part and the other shoulder (11) engages the inner side (17) of the projection (16) of the socket end part and positively retains said ring part (10) within the socket end part.

2. Plastics pipe part according to claim 1, characterized in that the shoulder (12) engages the inner edge (14) of the socket end part situated between the extremity (15) of the socket end, and the groove end wall (17).

3. Plastics pipe part according to claim 1 or 2 characterized in that the groove end wall (17) extends slopingly.

4. Plastics pipe part according to claims 1 to 3, characterized in that the transition (16) between the inner edge (14) and the groove end wall (17) is rounded.

5. Plastics pipe part according to claims 1 to 4, characterized in that the smallest inner diameter of the curved projection (16) of the socket end part is greater than the inner diameter of the socket (7).

6. Plastics pipe part according to claims 1 to 5, characterized in that the top (11a) of the shoulder (11) has an outer diameter which is smaller than the inner diameter of the groove (3).

## Revendications

1. Tronçon de tuyau en matière plastique (1) comprenant une partie d'extrémité femelle et un organe de retenue à centrage automatique (9), la partie d'extrémité femelle présentant une gorge (3) formée dans sa paroi pour recevoir une partie de tête (4) d'un organe d'étanchéité (3a), ladite partie de tête (4) étant retenue dans la gorge au moyen de l'organe de retenue (9), ledit organe de retenue comprenant une partie annulaire (10) qui s'étend à une certaine distance de la paroi intérieure de la partie femelle, radialement à l'intérieur de ladite partie de tête (4), et comportant un renfoncement incurvé annulaire (19) qui vient en prise avec une saillie incurvée annulaire (16) de la partie femelle, par l'intermédiaire de deux lèvres (11, 12) formées de part et d'autre du renfoncement (19), lesdites lèvres étant réunies par une partie de liaison déformable (13) tandis que le diamètre extérieur du renfoncement incurvé (19) est inférieur au plus petit diamètre intérieur de la saillie incurvée (16) de sorte qu'un espace libre annulaire (18) est formé entre eux, caractérisé en ce que la saillie incurvée annulaire (16), située à l'extrémité extérieure de la partie femelle, borde la gorge (3) et en ce que l'un des lèvres (12) s'applique contre la face extérieure (14) de la

saillie (16) de la partie d'extrémité femelle et l'autre lèvre (11) s'applique contre la face intérieur (17) de la saillie (16) de la partie d'extrémité femelle et retient efficacement ladite partie annulaire (10) à l'intérieur de la partie d'extrémité femelle.

2. Tronçon de tuyau en matière plastique selon la revendication 1, caractérisé en ce que la lèvre (12) s'applique contre la tranche intérieure (14) de la partie d'extrémité femelle, située entre le point extrême (15) de la partie femelle et la paroi d'extrémité (17) de la gorge.

3. Tronçon de tuyau en matière plastique selon la revendication 1 ou 2, caractérisé en ce que la paroi d'extrémité (17) de la gorge est inclinée.

4. Tronçon de tuyau en matière plastique selon les revendications 1 à 3, caractérisé en ce que la surface de transition (16) entre la tranche intérieure (14) et la paroi d'extrémité (17) de la gorge, est arrondie.

5. Tronçon de tuyau en matière plastique selon les revendications 1 à 4, caractérisé en ce que le plus petit diamètre intérieur de la saillie incurvée (16) de la partie d'extrémité femelle est plus grand que le diamètre intérieur de l'emboîture femelle (7).

6. Tronçon de tuyau en matière plastique selon les revendications 1 à 5, caractérisé en ce que le sommet (11a) de la lèvre (11) a un diamètre extérieur qui est inférieur au diamètre intérieur de la gorge (3).

**Patentansprüche**

1. Kunststoffrohrteil (1) mit einem Muffenendteil und einem selbstzentrierenden Halteelement (9), wobei der Muffenendteil in seiner Wand eine Nut (3) zur Aufnahme eines Kopfbereichs (4) eines Dichtungselements (3a) umfaßt, der Kopfbereich (4) in der Nut mittels des Halteelements (9) gehalten ist, das Halteelement einen Ringteil (10) umfaßt, der in einem Abstand von der Innenwand der Muffe vom Kopfbereich (4) radial nach innen verläuft, und eine bogenförmige Ringnut (19) aufweist, die durch zwei Schultern (11, 12), von denen auf jeder Seite der Ringnut (19) eine angeordnet ist, mit einem bogenförmigen Ringsvorsprung (16) der Muffe in Eingriff steht, und wobei die Schultern durch einen verformbaren Verbindungsteil (13) miteinander verbunden sind und der Außendurchmesser der bogenförmigen Ringnut (19) kleiner als der kleinste Innendurchmesser des bogenförmigen Ringvorsprungs (16) ist, derart, daß zwischen diesen ein freier Ringraum (18) gebildet ist, dadurch gekennzeichnet, daß der am äußeren Ende der Muffe angeordnete bogenförmige Ringsvorsprung (16) die Nut (3) begrenzt und daß eine der Schultern (12) mit der Außenseite (14) des Vorsprungs (16) des Muffenendteils und die andere Schulter (11) mit der Innenseite (17) des Vorsprungs (16) des Muffenendteils in Eingriff steht und den Ringteil (10) zwangschlüssig im Muffenendteil festlegt.

2. Kunststoffrohrteil nach Anspruch 1, dadurch gekennzeichnet, daß die Schulter (12) mit dem zwischen dem äußersten Ende (15) des Muffenendteils und der Nutendwand (17) gelegenen Innenrand (14) des Muffenendteils in Eingriff steht.

3. Kunststoffrohrteil nach Anspruch 1 oder 2, dadurch gekennzeichnet, daß die Nutendwand (17) geneigt verläuft.

4. Kunststoffrohrteil nach den Ansprüchen 1 bis 3, dadurch gekennzeichnet, daß der Übergang (16) zwischen dem Innenrand (14) und der Nutendwand (17) abgerundet ist.

5. Kunststoffrohrteil nach den Ansprüchen 1 bis 4, dadurch gekennzeichnet, daß der kleinste Innendurchmesser des bogenförmigen Vorsprungs (16) des Muffenendteils größer als der Innendurchmesser der Muffe (7) ist.

6. Kunststoffrohrteil nach den Ansprüchen 1 bis 5, dadurch gekennzeichnet, daß der obere Bereich (11a) der Schulter (11) einen Außendurchmesser hat, der kleiner also der Innendurchmesser der Nut (3) ist.

FIG. 1.

FIG. 2.

0 026 536

FIG.3.

_FIG: 4._